# EUROPÄISCHE PATENTANMELDUNG

(11) **EP 0 754 937 A2**
(43) Veröffentlichungstag der Anmeldung: **22.01.1997**
(21) Anmeldenummer: 96110247.2
(22) Anmeldetag: 25.06.1996
(51) Int. Cl.: G01M 1/34

(54) **Verfahren und Vorrichtung zum Wuchten von Prüflingen**

(30) Priorität: 21.07.1995 DE 19526751
(71) Anmelder: EMAG-MASCHINEN VERTRIEBS- und SERVICE GmbH, D-73084 Salach (DE)
(72) Erfinder: Hessbrüggen, Norbert, Dipl.-Ing., 73107 Eschenbach (DE); Dey, Hans-Joachim, Dr., 73054 Eislingen (DE)
(74) Vertreter: Zmyj, Erwin, Dipl.-Ing., Dipl.-Wirtsch.-Ing.

(57) **Zusammenfassung**

Für das Wuchten eines Prüflings (5) wird dieser in ein Futter (4) einer vertikal angeordneten Hauptspindel (1) aufgenommen und in Umdrehung versetzt. Spiegelbildlich zur Hauptspindel (1) jedoch seitlich versetzt ist eine Werkzeugspindel (7) vorgesehen, die ein Schneidwerkzeug (9) antreibt. Sowohl der Prüfling (5) als auch das Schneidwerkzeug (9) werden gleich- oder gegensinnig mit gleicher Drehzahl angetrieben, wobei über einen Sensor (16) und einen Winkelgeber (10) die Größe und Phasenlage der auszugleichenden Unwuchtmasse (34) festgestellt wird. Hierauf wird das Schneidwerkzeug (9), dessen Phasenwinkel ebenfalls über einen Winkelgeber (22) feststellbar ist, mit gleichem Phasenwinkel angetrieben und in Richtung auf den Prüfling (5) zugestellt, so daß der Materialabtrag erfolgen kann. Die Verarbeitung der erfaßten Signale erfolgt in einem Rechner (20), der die analog aufgenommenen Signale digitalisiert erhält und an eine Maschinensteuerung (14) weitergibt, die eine Phasengleichheit zwischen der umlaufenden Unwuchtmasse und dem Werkzeug sowie die Zustellbewegung des Werkzeuges in bezug auf den Prüfling bewirkt.

## Beschreibung

Die Erfindung bezieht sich auf ein Verfahren zum Wuchten von Prüflingen, bei dem bei einem in Drehung versetzten Prüfling die Phasenlage und die Größe der Unwucht festgestellt und durch Materialabtrag zumindest teilweise ausgeglichen wird, wobei der Vorgang des Messens und des Materialabtrages bis zum Erreichen einer angestrebten Restunwucht bei angetriebenem Prüfling wiederholt wird. Die Erfindung bezieht sich auch auf eine Vorrichtung zur Durchführung des Verfahrens.

Bei einem bekannten Verfahren dieser Art (DE 27 05 217 C3) ist für den Materialabtrag ein kontinuierlich arbeitender Laser vorgesehen, dessen Strahl über eine Umlenkeinrichtung unter Mitwirkung eines der Korrekturstelle gleichfalls zugeführten Oxidationsmittels zugeführt wird. Bei dieser Art des Materialabtrages ist ein relativ hoher Aufwand erforderlich, der sich aus der Installation und des Betriebes des Lasers, der Umlenkeinrichtung und der Einrichtung zum Zuführen des Oxidationsmittels zusammensetzt. Weiterhin ist die Stelle des Materialabtrags durch die Laser- und Oxidationsmitteleinwirkung nicht glattflächig, was sich unter Umständen nachteilig auswirken kann.

Aufgabe der Erfindung ist es ein Verfahren und eine Vorrichtung zur Verfügung zu stellen, mit deren Hilfes ein Wuchten bei geringem Aufwand möglich ist, wobei der Materialabtrag glattflächig ausfällt.

Diese Aufgabe wird ausgehend von einem Verfahren der oben angegebenen Art erfindungsgemäß dadurch gelöst, daß für den Materialabtrag ein Schneidwerkzeug auf einer Zustellbahn geführt wird und die Zustellbewegung für den Eingriff mit dem Prüfling immer dann erfolgt, wenn der den Mittelpunkt der Drehbewegung des Prüflings mit dem Massenschwerpunkt der Unwuchtmasse verbindende Unwuchtvektor die Zustellbahn des Schneidwerkzeuges schneidet.

Dieser Grundgedanke beinhaltet die Anwendung sowohl eines stehenden jedoch zustellbaren Schneidwerkzeuges, da bereits durch die Rotation des Prüflings eine Relativbewegung vorhanden ist, als auch die Anwendung eines umlaufenden und dabei ebenfalls zustellbaren Schneidwerkzeuges. Durch das erfindungsgemäße Verfahren wird in einfacher Weise ein Materialabtrag ermöglicht, der obendrein eine glattflächige Schnittstelle aufweist. Der Aufwand gegenüber dem bekannten Verfahren, bei welchem ein kontinuierlicher Laserstrahl zum Einsatz kommt, ist wesentlich geringer, da die gesamten Einrichtungen, die für den Materialabtrag bei dem bekannten Verfahren erforderlich sind, durch ein einziges Schneidwerkzeug ersetzt werden. Neben der Einsparung hinsichtlich des baulichen Aufwandes wird auch ein beträchtlicher Energieaufwand eingespart, denn die Relativverschiebung einer den Prüfling tragenden Spindel gegenüber einem Schneidwerkzeug benötigt weniger Energie als der Betrieb eines kontinuierlich arbeitenden Lasers, unabhängig davon, ob es sich um ein stehendes oder umlaufendes Schneidwerkzeug handelt. Bei der Verwendung eines stehenden Schneidwerkzeuges ist es gleichgültig, ob die notwendige Relativverschiebung zwischen Prüfling und Schneidwerkzeug durch Verschiebung der den Prüfling tragenden Spindel oder durch Verschiebung des Schneidwerkzeuges erfolgt.

Ausgehend von dem eingangs erläuterten Stande der Technik besteht eine vorteilhafte Ausbildung des Verfahrens darin, daß für den Materialabtrag ein Schneidwerkzeug in eine Rotation mit gleicher Drehzahl oder einem ganzzahligen Bruchteil der Prüflingsdrehzahl sowie mit gleichsinniger oder gegensinniger Drehung versetzt wird, daß die Phasenlage des Schneidwerkzeuges bestimmt und die Phasenwinkel des Schneidwerkzeuges und der Unwucht synchronisiert werden und daß nach Erreichen der Phasengleichheit das Schneidwerkzeug in Eingriff mit dem Prüfling gebracht wird.

Bei dieser Ausgestaltung erfolgt zwar ein Antrieb des Schneidwerkzeuges um eine Rotationsachse, jedoch sind die Anforderungen an die relative Zustellbewegung zwischen Prüfling und Schneidwerkzeug hinsichtlich der Geschwindigkeit dieser Zustellbewegung bei angetriebenem Schneidwerkzeug weitaus nicht so hoch wie bei einem stehenden Schneidwerkzeug. Der Energieaufwand für den Antrieb des Schneidwerkzeuges ist ebenfalls geringer als der Aufwand für den Betrieb eines kontinuierlich arbeitenden Lasers.

In vorteilhafter Weiterbildung der Erfindung können die Meßwerte analog erfaßt, digitalisiert und einem Rechner zur Auswertung übergeben werden, der in Polar-Koordinaten den Ort bzw. die Phasenlage und die Masse der zu beseitigenden Unwuchtmasse sowie bei drehendem Schneidwerkzeug die Phasenlage des Schneidwerkzeuges errechnet und die zum Ausgleich notwendigen Parameter der Maschinensteuerung für den Antrieb des Prüflings und/oder des Schneidwerkzeuges vorgibt.

Da die Berechnung in Polarkoordinaten erfolgt, ist es möglich bei formunsymmetrischen Prüflingen mit fehlender Masse an der theoretisch festgestellten Phasenlage der Unwucht vektoriell hierzu liegende Orte für den Massenabtrag festzulegen.

Die Vorrichtung zur Durchführung des Verfahrens ist dadurch gekennzeichnet, daß an einer Hauptspindel einer Werkzeugmaschine mit einem Spannmittel für einen Prüfling in unmittelbarer Nähe eines Lagers der Hauptspindel ortsfest ein vorzugsweise als piezo-elektrisches Element ausgebildeter Sensor für die Ermittlung der Unwuchtmasse und an der Spindel ein Winkelgeber für die Ermittlung der Phasenlage der Unwucht angeordnet sind, daß ein Analog-Digital-Wandler für die erfaßten Meßwerte mit einem Rechner verbunden ist, der zur Übergabe der ermittelten Parameter für die Bearbeitung des Prüflings mit einer NC-Maschinensteuerung in Verbindung steht, daß ein rotierendes Schneidwerkzeug vorgesehen ist, das mit gleicher oder einem ganzzahligen Bruchteil der Prüflingsdrehzahl sowie mit gleichsinniger oder gegensinniger Drehung wie die Hauptspindel antreibbar ist, dessen Phasenlage durch einen Winkelgeber erfaßbar ist, wobei diese Signale an die NC-Maschinensteuerung weiterleitbar sind, daß die Hauptspindel und das Schneidwerkzeug relativ zueinander zustellbar sind und daß die Zustellbewegung in Abhängigkeit von den der Maschinensteuerung durch den Rechner übermittelten Parametern steuerbar ist.

Bei Verwendung eines stehenden Schneidwerkzeuges ist die Vorrichtung ähnlich wie für ein drehendes Schneidwerkzeug aufgebaut, jedoch ist die Einrichtung zur Ermittlung der Phasenlage des Schneidwerkzeuges durch eine Einrichtung der oszillierenden Zustellbewegung ersetzt.

Bei gegensinniger Drehung muß zur Erzielung einer Relativbewegung zwischen Schneidwerkzeug und Prüfling das Schneidwerkzeug einen wesentlich größeren Abstand zu seiner Drehachse als der abzutragende Materialteil zu seiner Drehachse aufweisen.

Wenn in weiterer Ausbildung der Erfindung die Hauptspindel als eine in vertikaler Richtung angeordnete, nach dem pick-up-Verfahren arbeitende Motorspindel ausgebildet ist, so wird hier nicht nur der Vorteil einer einfachen Be- und Entladung des Prüflings erzielt, sondern es wird auch gewährleistet, daß der anfallende Materialabtrag nach unten abfällt und nicht am Prüfling hängenbleibt, was die Messung beeinträchtigen würde.

Die Erfindung wird nachfolgend anhand eines in der Zeichnung dargestellten Ausführungsbeispieles näher erläutert. In der Zeichnung zeigen:
- **Figur 1:**: die wesentlichen Teile einer Vorrichtung zur Durchführung des erfindungsgemäßen Verfahrens;
- **Figur 2:**: eine der Figur 1 im wesentlichen entsprechende Ausführungsform, jedoch mit stehendem, aber zustellbaren Schneidwerkzeug;
- **Figur 3a bis 3c:**: schematische Darstellungen des Prüflings und des Schneidwerkzeuges in verschiedenen Phasenlagen; und
- **Figur 4:**: eine grafische Darstellung des Verlaufs des Referenzpunktes der Hauptspindel und der hierzu synchronisierten Bewegung des Schneidwerkzeuges sowie desjenigen der Unwucht.

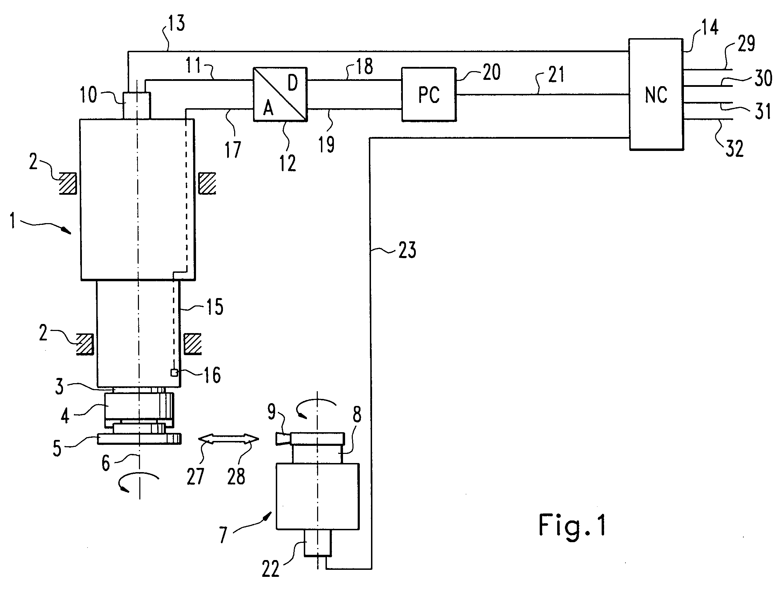

Figur 1 zeigt die schematische Anordnung einer Motorspindel 1 einer Vertikaldrehmaschine, die in Führungen 2 in vertikaler Richtung, d.h. in Z-Richtung verfahrbar ist, wobei die Spindel 3 zusammen mit dem an ihrem unteren Ende angeordneten Spannfutter 4, das zum Spannen eines Prüflinges 5 dient, um die mit 6 bezeichnete Drehachse in Drehung versetzbar ist. Spiegelbildlich zu der als Motorspindel ausgebildeten Hauptspindel 1 ist seitlich versetzt eine Werkzeugspindel 7 vorgesehen, die an ihrer Spindel 8 ein Schneidwerkzeug 9 trägt. Die Spindeln 1 und 7 sind in horizontaler Richtung gegeneinander verfahrbar angeordnet, wobei es unerheblich ist, ob nur eine der beiden Spindeln oder beide Spindeln in horizontaler Richtung verfahrbar sind, um das Schneidwerkzeug 9 mit dem Prüfling 5 in Eingriff zu bringen.

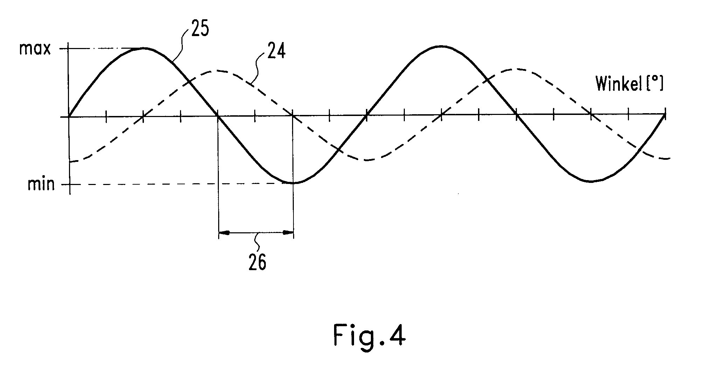

Mit der Spindel 3 der Motorspindel 1 ist ein Winkelgeber 10 verbunden, der ein Signal mit sinusförmigem Verlauf über eine Leitung 11 an einen Analog-Digital-Wandler 12 und über eine Leitung 13 an eine NC-Maschinensteuerung 14 mit GANTRY-Funktion weitergibt. Dieses sinusförmige Signal gibt den Umlauf des Referenzpunktes der Spindel 3 wieder. Zur Erfassung der Größe und der Phasenlage der Unwucht des Prüflings 5 ist am Gehäuse 15 ein vorzugsweise als piezo-elektrisches Element ausgebildeter Sensor 16 angeordnet, der über eine Leitung 17 mit dem Analog-Wandler 12 verbunden ist und an diesen ein sinusförmiges Signal leitet, welches die Phasenlage und die Größe der Unwuchtmasse repräsentiert. Über Leitungen 18 und 19 ist der Analog-Digital-Wandler 12 mit einem Rechner 20 verbunden, wobei über die Leitung 18 das Signal des Winkelgebers 10 und über die Leitung 19 das Signal des Sensors 16 an den Rechner 20 weitergegeben werden. Aufgrund dieser beiden Signale wird im Rechner 20 die Winkellage und die Größe der Unwucht bestimmt und über eine Leitung 21 an die NC-Maschinensteuerung 14 weitergegeben. Diese erhält über die Leitung 13 das Winkelsignal für den Referenzpunkt der Spindel 3, so daß hieraus die Phasenverschiebung der Unwuchtmasse gegenüber dem Referenzpunkt der Spindel sich ergibt. Die Spindel 8 der Werkzeugspindel 7 ist mit einem Winkelgeber 22 verbunden, der über eine Leitung 23 mit der NC-Maschinensteuerung 14 verbunden ist, die hierdurch das sinusförmige Winkelsignal des umlaufenden Schneidwerkzeuges 9 erhält. Zunächst werden vor dem eigentlichen Wuchtvorgang über die GANTRY-Funktion der NC-Maschinensteuerung die Motorspindel 1 und die Werkzeugspindel 7 synchron angetrieben, d.h. der Verlauf des Referenzpunktes der Spindel 3 und das Winkelsignal des umlaufenden Schneidwerkzeuges 9 verlaufen deckungsgleich und sind durch die Kurve 24 in Figur 4 wiedergegeben. Wenn nun das Signal bezüglich der Unwucht vorliegt, welches vom Sensor 16 ausgeht, das in Figur 4 mit der Kurve 25 wiedergegeben ist, so ist feststellbar, daß zwischen diesen beiden Kurven eine Phasenverschiebung vorliegt, die mit 26 bezeichnet ist. Diese Phasenverschiebung liegt immer vor, wenn die Unwuchtmasse nicht zufälligerweise mit dem Referenzpunkt der Spindel 3 zusammenfällt. Mit Hilfe der GANTRY-Funktion der NC-Maschinensteuerung 14 ist es möglich, die beiden Spindeln 3 und 8 so zu synchronisieren, daß die Phasenverschiebung 26 aufgehoben ist, d.h. bei jedem Umlauf des Prüflings 5 und des Schneidwerkzeuges 9 liegen sich der Massenschwerpunkt der Unwucht und die Schneide des Schneidwerkzeuges 9 gegenüber, so daß bei einer in diesem Zeitpunkt erfolgten Zustellung des Schneidwerkzeuges 9 in Richtung des Pfeiles 27 ein Materialabtrag entsprechend der vorher errechneten Größe der Unwuchtmasse erfolgen kann. Hierauf wird das Schneidwerkzeug 9 in Richtung des Pfeiles 28 wieder zurückgezogen. Über die mit 29 bezeichnete Leitung erfolgt die Ansteuerung der C-Achse der Hauptspindel 1, über die Leitung 30 die Ansteuerung der Z-Achse, über die Leitung 31 die Ansteuerung der X-Achse, jeweils der Motorspindel 1 und über die Leitung 32 erfolgt die Ansteuerung der Werkzeugspindel 8 hinsichtlich der Winkellage.

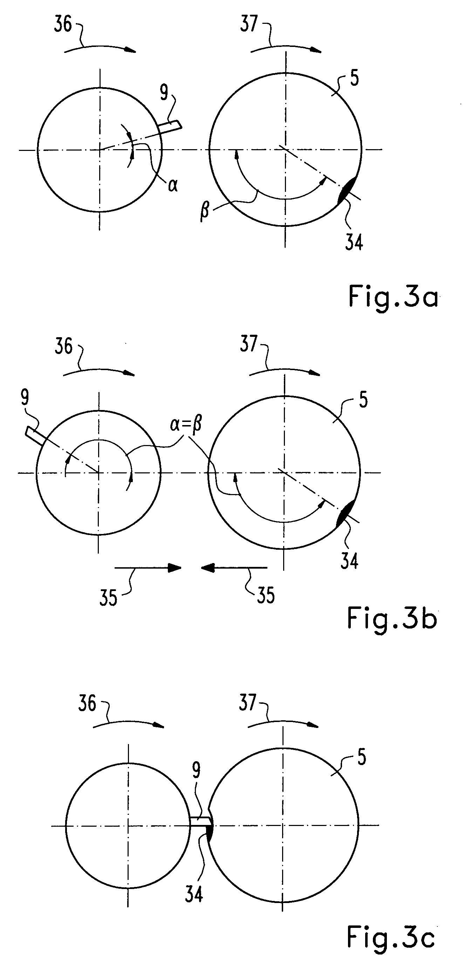

Die Figuren 3a bis 3c dienen zur Erläuterung des Wuchtvorganges, wofür nur der Prüfling 5 und das Schneidwerkzeug 9 dargestellt sind. Die am Prüfling 5 vorhandene Unwucht ist mit 34 bezeichnet. Wie aus Figur 3a ersichtlich, weist das Schneidwerkzeug 9 gegenüber dem Referenzpunkt der Motorspindel einen Phasenwinkel α und die Unwucht 34 einen Phasenwinkel von β auf. Mit Hilfe der GANTRY-Funktion der Maschinensteuerung werden dann die Motorspindel und/oder die Werkzeugspindel so beeinflußt, daß das Schneidwerkzeug 9 und die Unwucht 34 mit gleichem Phasenwinkel umlaufen, d.h. der Winkel α entspricht dem Winkel β. Sobald diese Phasengleichheit herbeigeführt ist, erfolgt eine Zustellbewegung in Richtung der Pfeile 35, wodurch das Schneidwerkzeug 9 in der Lage ist durch Materialabtrag am Prüfling 5 die Unwucht 34 zu beseitigen, wie dies aus Figur 3c hervorgeht. Bei dem in den Figuren 3a bis 3c dargestellten Beispiel werden Schneidwerkzeug und Prüfling mit gleicher Drehzahl und gleicher Drehrichtung angetrieben, wie dies durch die Pfeile 36 und 37 veranschaulicht ist.

Figur 4 zeigt den jeweiligen sinusförmigen Verlauf des umlaufenden Schneidwerkzeuges 9 mit gestrichelter Linie 24 und der umlaufenden Unwucht 34 mit durchgezogener Linie 25. Die Kurve 24 gibt auch gleichzeitig den Verlauf des Referenzpunktes der Hauptspindel 1 wieder, da die Drehbewegung der beiden Spindeln vor dem Wuchtvorgang synchron verlaufen. Der in Figur 4 dargestellte Zustand entspricht demjenigen nach Figur 3a, wobei mit der Abstandslinie 26 die in Figur 3a aufgezeigte Phasenverschiebung zum Ausdruck gebracht wird.

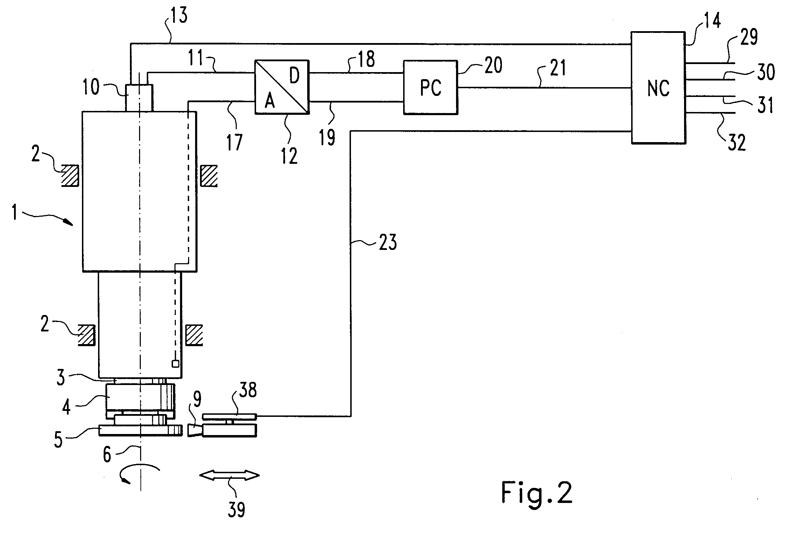

Figur 2 zeigt eine Vorrichtung zur Durchführung des Verfahrens, bei dem das Schneidwerkzeug nicht umläuft, jedoch pulsierende Zustellbewegungen in Richtung auf den Prüfling ausführt. In Figur 2 sind alle Teile, die mit denen in Figur 1 übereinstimmen mit den gleichen Bezugszahlen versehen. Wie aus Figur 2 ersichtlich, wird der Prüfling 5 in gleicher Weise wie bei der Vorrichtung gemäß Figur 1 in Umdrehung versetzt, wobei auch hier durch den Winkelgeber 10 und den Sensor 16 die entsprechenden Signale in gleicher Weise an den Analog-Digital-Wandler 12 weitergegeben werden, wo die analogen Signale digitalisiert werden. Mit dem Schneidwerkzeug 9 ist ein Lineargeber 38 verbunden, der die in Richtung des Doppelpfeiles 39 verlaufenden pulsierenden Bewegungen wiedergibt. Dieses Signal ist ebenfalls sinusförmig und entspricht dem Kurvenverlauf 24 in Figur 4. Aus Gründen der Einfachheit ist der Antrieb für die Ausführung dieser pulsierenden Zustellbewegungen in Figur 2 nicht dargestellt. Das Signal des Lineargebers 38 wird über die Leitung 23 der NC-Maschinensteuerung 14 zugeführt. Die Ansteuerung der Motorspindel 1 erfolgt ebenso wie in Figur 1 über die Leitungen 29, 30 und 31, während die Zustellbewegungen des Schneidwerkzeuges 9 über die Leitung 32 erfolgt.

Auch bei dieser Ausgestaltung des Verfahrens wird in gleicher Weise die Phasenlage der Unwucht ermittelt, wie dies in bezug auf Figur 1 beschrieben wurde. Die Zustellbewegung des Schneidwerkzeuges 9 muß dann so erfolgen, daß der Eingriff des Schneidwerkzeuges am Prüfling immer dann erfolgt, wenn die Unwuchtmasse 34 die Bewegungsbahn des in Richtung des Doppelpfeiles 39 pulsierenden Schneidwerkzeuges 9 schneidet.

## Patentansprüche

1. Verfahren zum Wuchten von Prüflingen, bei dem bei einem in Drehung versetzten Prüfling die Phasenlage und die Größe der Unwucht festgestellt und durch Materialabtrag zumindest teilweise ausgeglichen wird, wobei der Vorgang des Messens und des Materialabtrags bis zum Erreichen einer angestrebten Restunwucht bei angetriebenem Prüfling wiederholt wird, **dadurch gekennzeichnet,** daß für den Materialabtrag ein Schneidwerkzeug auf einer Zustellbahn geführt wird und die Zustellbewegung für den Eingriff mit dem Prüfling immer dann erfolgt, wenn der den Mittelpunkt der Drehbewegung des Prüflings mit dem Massenschwerpunkt der Unwuchtmasse verbindende Unwuchtvektor die Zustellbahn des Schneidwerkzeuges schneidet.

2. Verfahren zum Wuchten von Prüflingen, bei dem bei einem in Drehung versetzten Prüfling die Phasenlage und die Größe der Unwucht festgestellt und durch Materialabtrag zumindest teilweise ausgeglichen wird, wobei der Vorgang des Messens und des Materialabtrags bis zum Erreichen einer angestrebten Restunwucht bei angetriebenem Prüfling wiederholt wird, **dadurch gekennzeichnet,** daß für den Materialabtrag ein Schneidwerkzeug in eine Rotation mit gleicher Drehzahl oder einem ganzzahligen Bruchteil der Prüflingsdrehzahl sowie mit gleichsinniger oder gegensinniger Drehung versetzt wird, daß die Phasenlage des Schneidwerkzeuges bestimmt und die Phasenwinkel des Schneidwerkzeuges und der Unwucht synchronisiert werden, und daß nach Erreichen der Phasengleichheit das Schneidwerkzeug in Eingriff mit dem Prüfling gebracht wird.

3. Verfahren nach Anspruch 1 oder 2, **dadurch gekennzeichnet,** daß die Meßwerte analog erfaßt, digitalisiert und einem Rechner zur Auswertung übergeben werden, der in Polar-Koordinaten den Ort bzw. die Phasenlage und die Masse der zu beseitigenden Unwuchtmasse sowie bei drehendem Schneidwerkzeug die Phasenlage des Schneidwerkzeuges errechnet und die zum Ausgleich notwendigen Parameter der Maschinensteuerung für den Antrieb des Prüflings und/oder des Werkzeuges vorgibt.

4. Verfahren nach Anspruch 3, **dadurch gekennzeichnet,** daß bei formunsymmetrischen Prüflingen mit fehlender Masse an der theoretisch festgestellten Phasenlage der Unwucht vektoriell hierzu liegende Orte für den Massenabtrag festgelegt werden.

5. Vorrichtung zur Durchführung des Verfahrens nach einem der Ansprüche 1 bis 4, **dadurch gekennzeichnet,** daß an einer Hauptspindel (1) einer Werkzeugmaschine mit einem Spannmittel (4) für einen Prüfling (5) in unmittelbarer Nähe eines Lagers der Hauptspindel (1) ortsfest ein vorzugsweise als piezo-elektrisches Element ausgebildeter Sensor (16) für die Ermittlung der Unwuchtmasse und an der Spindel (3) ein Winkelgeber (10) für die Ermittlung der Phasenlage der Unwucht angeordnet sind, daß ein Analog-Digital-Wandler (12) für die erfaßten Werte mit einem Rechner (20) verbunden ist, der zur Übergabe der ermittelten Parameter für die Bearbeitung des Prüflings (5) mit einer NC-Maschinensteuerung (14) in Verbindung steht, daß ein rotierendes Schneidwerkzeug (9) vorgesehen ist, das mit gleicher oder einem ganzzahligen Bruchteil der Prüflingsdrehzahl sowie mit gleichsinniger oder gegensinniger Drehung wie die Hauptspindel (1) antreibbar ist, dessen Phasenlage durch einen Winkelgeber (22) erfaßbar ist, wobei diese Signale an die NC-Maschinensteuerung weiterleitbar sind, daß die Hauptspindel (1) und das Schneidwerkzeug (9) relativ zueinander zustellbar sind und daß die Zustellbewegung in Abhängigkeit von den der Maschinensteuerung (14) durch den Rechner (20) übermittelten Parametern steuerbar ist.

6. Vorrichtung zur Durchführung des Verfahrens nach einem der Ansprüche 2 bis 4, **dadurch gekennzeichnet,** daß an einer Hauptspindel (1) einer Werkzeugmaschine mit einem Spannmittel (4) für einen Prüfling (5) in unmittelbarer Nähe eines Lagers der Hauptspindel (1) ortsfest ein vorzugsweise als piezo-elektrisches Element ausgebildeter Sensor (16) für die Ermittlung der Unwuchtmasse und an der Spindel (3) ein Winkelgeber (10) für die Ermittlung der Phasenlage der Unwucht angeordnet sind, daß ein Analog-Digital-Wandler (12) für die erfaßten Werte mit einem Rechner (20) verbunden ist, der zur Übergabe der ermittelten Parameter für die Bearbeitung des Prüflings (5) mit einer NC-Maschinensteuerung (14) in Verbindung steht, daß ein stehendes Schneidwerkzeug (9) vorgesehen ist, daß die Hauptspindel (1) und das Schneidwerkzeug (9) relativ zueinander zustellbar sind und daß die Zustellbewegung in Abhängigkeit von den der Maschinensteuerung (14) durch den Rechner (20) übermittelten Parametern steuerbar ist.

7. Vorrichtung nach Anspruch 5, **dadurch gekennzeichnet,** daß bei gegensinniger Drehung von Prüflingen (5) und Schneidwerkzeug (9) das Werkzeug (9) einen wesentlich größeren Abstand zur Drehachse als der abzutragende Materialteil (34) zu seiner Drehachse aufweist.

8. Vorrichtung nach einem der Ansprüche 5 bis 7, **dadurch gekennzeichnet,** daß die Hauptspindel (1) als eine in vertikaler Richtung angeordnete, nach dem pick-up-Verfahren arbeitende Motorspindel ausgebildet ist.
